# EUROPÄISCHE PATENTANMELDUNG

(11) **EP 3 355 180 A1**
(43) Veröffentlichungstag der Anmeldung: **01.08.2018**
(21) Anmeldenummer: 17153054.6
(22) Anmeldetag: 25.01.2017
(51) Int. Cl.: G06F 3/06, G06F 9/455

(54) **VERFAHREN ZUM ERSTELLEN EINER DATENSICHERUNG EINER VIRTUALISIERTEN AUTOMATISIERUNGSLÖSUNG, COMPUTERPROGRAMM MIT EINER IMPLEMENTATION DES VERFAHRENS UND NACH DEM VERFAHREN ARBEITENDER VIRTUALISIERUNGSSERVER**

(71) Anmelder: Siemens Aktiengesellschaft, 80333 München (DE)
(72) Erfinder: Schuetz, Andreas, 96129 Strullendorf (DE)

(57) **Zusammenfassung**

Die Erfindung ermöglicht eine Datensicherung (22) einer auf einem Virtualisierungsserver (10) ablaufenden virtualisierten Automatisierungslösung (12), wobei auf dem Virtualisierungsserver (10) aufgrund eines Aufrufs von einem entfernten Computer (26) ein Computerprogramm (20) mit zumindest einer Programmcodeanweisung (30) mit einer Spezifikation (32) der in die Datensicherung (22) einzuschließenden Daten und Dateien ausgeführt wird und die Datensicherung (22) im Rahmen der Ausführung des Computerprogramms (20) erstellt wird.

## Beschreibung

Die Erfindung betrifft ein Verfahren zum Erstellen einer Datensicherung einer virtualisierten Automatisierungslösung. Eine Automatisierungslösung bezieht sich dabei jeweils auf einen zu automatisierenden technischen Prozess und als Automatisierungslösung werden dabei das oder jedes für diesen Prozess bestimmte Steuerungsprogramm sowie die davon be- oder verarbeiteten Daten bezeichnet. Bei dem technischen Prozess handelt es sich zum Beispiel um einen Fertigungsprozess oder einen Chargenprozess. Bei einer Virtualisierung einer solchen Automatisierungslösung läuft das oder jedes Steuerungsprogramm auf einer virtualisierten Hardware ab, nämlich einem sogenannten Virtualisierungsserver.

Eine Virtualisierung einer Automatisierungslösung hat verschiedene Vorteile. Nicht zuletzt gehört dazu, dass im Falle einer Störung, insbesondere einer Störung in der Hardware des Virtualisierungsservers, die Automatisierungslösung zur Fortsetzung der Steuerung und/oder Überwachung des jeweiligen technischen Prozesses auf einen anderen Virtualisierungsserver übertragen werden kann.

Gebräuchliche Virtualisierungssoftware bietet oftmals nur unzureichende Datensicherungsmöglichkeiten. Zum Beispiel bietet das Produkt VMware nur die Möglichkeit, die Konfiguration des sogenannten Hypervisors zu sichern. Wenn eine Sicherung einer virtuellen Maschine zurückgespielt werden soll, ist dann zunächst eine Neuinstallation des Hypervisors erforderlich, woraufhin in einem anschließenden Schritt dessen gesicherte Konfiguration zurückgespielt werden kann. Treiber, Skripte oder andere Software-Pakete, die eventuell nachträglich in den Hypervisor installiert wurden, sind von der Sicherung der Konfiguration des Hypervisors nicht erfasst und müssen mit entsprechendem Zeitaufwand manuell nachinstalliert werden.

Alternativ kann der Virtualisierungsserver auch heruntergefahren werden und das Speichermedium, auf dem der Hypervisor installiert ist, auf herkömmliche Art und Weise gesichert werden. Dies kann allerdings einen Anlagenstillstand zur Folge haben und ist mit erheblichem Zeitaufwand verbunden.

Eine Aufgabe der vorliegenden Erfindung besteht darin, ein Verfahren anzugeben, mittels dessen auf einfache Art und Weise alle zum Betrieb einer Automatisierungslösung auf einem Virtualisierungsserver notwendigen Daten erfasst und gesichert werden können.

Diese Aufgabe wird mittels eines Verfahrens zum Erstellen einer Datensicherung einer virtualisierten Automatisierungslösung mit den Merkmalen des Anspruchs 1 gelöst. Dazu ist bei einem Verfahren zum Erstellen einer Datensicherung einer auf einem Virtualisierungsserver ablaufenden virtualisierten Automatisierungslösung Folgendes vorgesehen: Auf dem Virtualisierungsserver wird aufgrund eines Aufrufs von einem entfernten Computer ein Computerprogramm ausgeführt, unter dessen Kontrolle das Erstellen der Datensicherung erfolgt. Das Computerprogramm umfasst eine Definition der Daten und/oder Dateien, die von der Datensicherung erfasst werden sollen. Dafür umfasst das Computerprogramm zumindest eine Programmcodeanweisung mit einer Spezifikation der in die Datensicherung einzuschließenden Daten. Im Rahmen der Ausführung des Computerprogramms durch den Virtualisierungsserver wird die Datensicherung schließlich erstellt.

Das durch den Virtualisierungsserver ausführbare Computerprogramm, zum Beispiel ein Skript, eine Anweisungsliste oder dergleichen, veranlasst bei Ausführung durch den Virtualisierungsserver eine Sicherung all derjenigen Daten und Dateien, die in dem Computerprogramm als für die Datensicherung der virtualisierten Automatisierungslösung notwendig spezifiziert sind. Die Sicherung erfolgt bevorzugt, aber nicht notwendig, auf eine vom Virtualisierungsserver verschiedene Hardware, die im Folgenden zur Unterscheidung als Datensicherungsserver bezeichnet wird. Die Übertragung der Datensicherung vom Virtualisierungsserver zum Datensicherungsserver erfolgt über eine leitungslose oder leitungsgebundene kommunikative Verbindung zwischen dem Virtualisierungsserver und dem Datensicherungsserver, insbesondere über eine Ethernet-Verbindung, bevorzugt abgesichert durch das HTTPS-Protokoll.

Der Vorteil der hier vorgeschlagenen Lösung besteht darin, dass eine Datensicherung einer virtualisierten Automatisierungslösung möglich ist, welche durch Rücksichern der Datensicherung reibungslos auf einen anderen Virtualisierungsserver übertragen werden und dort mit minimalem Zeitverlust wieder in Betrieb gehen kann.

Bei einer bevorzugten Ausführungsform des Verfahrens wird der auf dem Virtualisierungsserver ausgeführte Hypervisor durch einen entsprechenden Aufruf veranlasst, seine Konfigurationsdaten auf das Bootmedium des Hypervisors zurückzuschreiben. Dieser spezielle Aufruf des Hypervisors ist Teil des zum Erstellen der Datensicherung bestimmten Computerprogramms. Der Hypervisor läuft üblicherweise komplett im RAM des Virtualisierungsservers ab und Konfigurationsänderungen werden nur gespeichert, wenn die Konfigurationsdatei oder die Konfigurationsdateien des Hypervisors auf einem Speichermedium des Virtualisierungsservers, zum Beispiel dem Bootmedium des Hypervisors, gespeichert wird bzw. werden. Dies erfolgt üblicherweise automatisch und in regelmäßigen Abständen, zum Beispiel jede Stunde. Eine Datensicherung, die unmittelbar nach einer solchen automatischen Sicherung der Konfiguration abläuft, erfasst bis zur nächsten automatischen Sicherung erfolgende Konfigurationsänderungen nicht. Der spezielle Aufruf des Hypervisors bewirkt durch seine Position in dem Computerprogramm, dass die Konfigurationsdaten vor Erstellen der Datensicherung zurückgeschrieben werden. Damit ist sichergestellt, dass beim Erstellen der Datensicherung stets die aktuelle Konfiguration des Hypervisors gesichert wird, wenn der Speicherort der Konfigurationsdateien von der Datensicherung erfasst ist.

Bei einer besonderen Ausführungsform des Verfahrens erfolgt der Aufruf des Computerprogramms zum Erstellen der Datensicherung über einen Webbrowser auf dem aufrufenden Computer, zum Beispiel in Form eines Aufrufs wie https:\\<IP-Adresse des Virtualisierungsservers>\backup.html.

Dann kann das Anlegen der Datensicherung besonders einfach und unkompliziert und auch von einem entfernten Ort ausgelöst werden. Besondere Detailkenntnisse sind auf Seiten des Bedieners, der auf diese Weise das Anlegen der Datensicherung veranlasst, nicht erforderlich und entsprechend kann das Verfahren auch durch ungeschultes Personal durchgeführt werden, zum Beispiel zu bestimmten Zeitpunkten oder in regelmäßigen Abständen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche sowie der Beschreibung bei einer näheren Konkretisierung eines Merkmals in einem nachgeordneten Anspruch davon auszugehen, dass eine derartige Beschränkung in den jeweils vorangehenden Ansprüchen sowie einer allgemeineren Ausführungsform des gegenständlichen Datensicherungsverfahrens nicht vorhanden ist. Jede Bezugnahme in der Beschreibung auf Aspekte nachgeordneter Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Das hier vorgeschlagene Verfahren zum Erstellen einer Datensicherung ist zur automatischen Ausführung in Form eines Computerprogramms realisiert. Das Computerprogramm ist zur Ausführung durch ein Computersystem bestimmt. Das ausführende Computersystem ist dabei der Virtualisierungsserver. Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden.

Das Computerprogramm ist eine Implementierung des gegenständlichen Verfahrens zum Erstellen einer Datensicherung in Software. Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von den Begriffen Software und Computerprogramm auch andere Implementationsmöglichkeiten, nämlich insbesondere eine Implementation in Firmware oder in Firm- und Software oder in Firm- und Hardware, umfasst sind.

Die Erfindung ist damit einerseits auch ein Computerprogramm mit durch einen Computer ausführbaren Programmcodeanweisungen zum Erstellen einer Datensicherung einer virtualisierten Automatisierungslösung und andererseits ein Speichermedium mit einem derartigen Computerprogramm, also ein Computerprogrammprodukt mit Programmcodemitteln, sowie schließlich auch ein Computersystem, hier der Virtualisierungsserver, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen.

Es zeigen
- FIG 1: einen Virtualisierungsserver mit einer darauf ablaufenden zu sichernden Automatisierungslösung sowie einen Datensicherungsserver und
- FIG 2: ein zur Sicherung der auf dem Virtualisierungsserver ablaufenden Automatisierungslösung bestimmtes Computerprogramm.

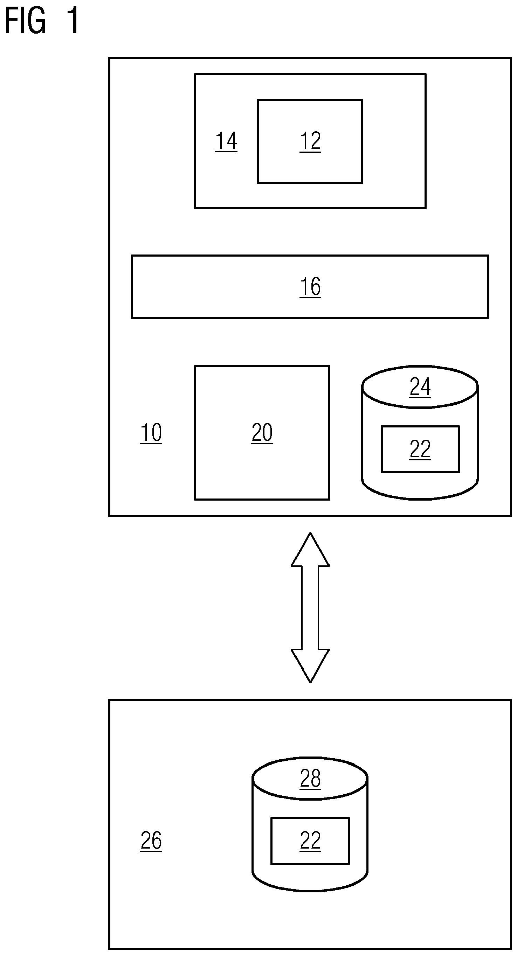

Die Darstellung in FIG 1 zeigt in schematisch stark vereinfachter Weise einen grundsätzlich an sich bekannten Virtualisierungsserver 10. Auf diesem läuft eine Automatisierungslösung 12 ab. Im Rahmen der Ausführung der Automatisierungslösung 12 durch den Virtualisierungsserver 10 erfolgt in ebenfalls grundsätzlich an sich bekannter Art und Weise eine Steuerung und/oder Überwachung eines selbst nicht dargestellten technischen Prozesses. Die Ausführung der Automatisierungslösung 12 erfolgt mittels einer oder mehrerer virtueller Maschinen 14. Mittels weiterer virtueller Maschinen 14 können auf demselben Virtualisierungsserver 10 weitere Automatisierungslösungen 12 ausgeführt werden. In der Darstellung in FIG 1 ist mit Rücksicht auf einfache Verhältnisse nur eine einzelne virtuelle Maschine 14 dargestellt. Ein sogenannter Hypervisor 16 fungiert als Schnittstelle zwischen der virtuellen Maschine 14 oder einer Mehrzahl virtueller Maschinen 14 und der (nicht gezeigten) Hardware des Virtualisierungsservers 10.

Zur Datensicherung einer virtualisierten Automatisierungslösung 12 gemäß dem hier vorgeschlagenen Ansatz ist ein durch den Virtualisierungsserver 10 ausführbares Computerprogramm 20 vorgesehen. Das Computerprogramm 20 wird von einem mit dem Virtualisierungsserver 10 kommunikativ, zum Beispiel über das Internet, verbundenen entfernten Computer 26 aus aufgerufen. Bei dem Computerprogramm 20 handelt es sich zum Beispiel um ein Skript, eine Anweisungsliste oder dergleichen. Das Computerprogramm 20 veranlasst bei einer Ausführung durch den Virtualisierungsserver 10 eine Sicherung aller in dem Computerprogramm 20 spezifizierten Daten und Dateien und das Ergebnis ist eine Datensicherung 22 der virtualisierten Automatisierungslösung 12. Die Datensicherung 22 wird zunächst in einem lokalen Massenspeicher 24 des Virtualisierungsservers 10 oder einem für den Virtualisierungsserver 10 erreichbaren Massenspeicher zwischengespeichert. Nach Abschluss der Sicherung wird die Datensicherung 22 zu dem Computer 26 übertragen, der das Computerprogramm 20 zur Erzeugung der Datensicherung 22 aufgerufen hat. Dieser aufrufende Computer 26 fungiert damit als Speicherort der Datensicherung 22 und wird entsprechend auch als Datensicherungsserver 26 bezeichnet. Dort wird die Datensicherung 22 in einem lokalen Massenspeicher 28 des Datensicherungsservers 26 oder einem für den Datensicherungsserver 26 erreichbaren Massenspeicher gespeichert. Der Virtualisierungsserver 10 und der Datensicherungsserver 26 sind auch für diese Datenübertragung vom Virtualisierungsserver 10 zum Datensicherungsserver 26 in grundsätzlich an sich bekannter Art und Weise kommunikativ miteinander verbunden und auch für diese Datenübertragung wird zum Beispiel eine über das Internet gegebene Verbindung genutzt. Die Übertragung der Daten der Datensicherung 22 zum Datensicherungsserver 26 erfolgt bevorzugt in abgesicherter Form, zum Beispiel nach dem HTTPS-Protokoll.

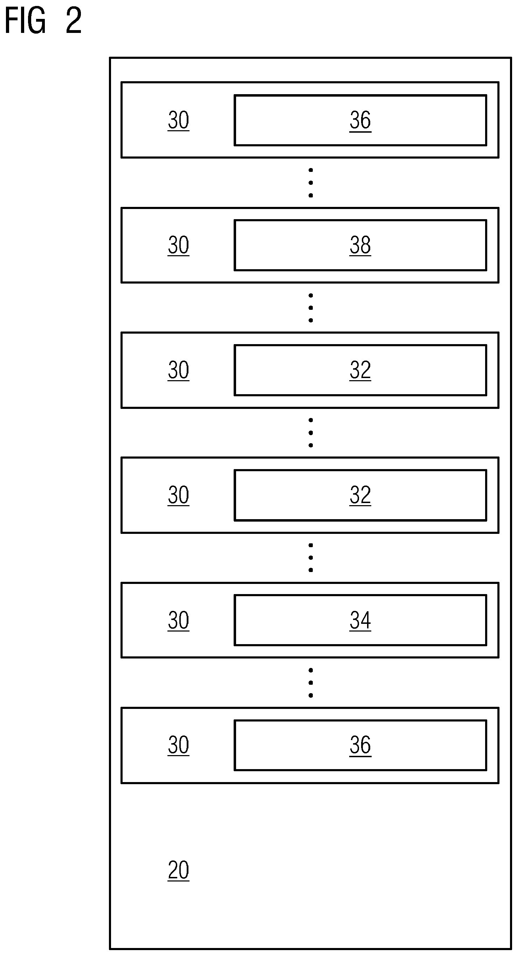

Die Darstellung in FIG 2 zeigt - ebenfalls in schematisch stark vereinfachter Art und Weise - das zur Erzeugung der Datensicherung 22 durch den Virtualisierungsserver 10 ausgeführte Computerprogramm 20 mit einzelnen weiteren Details. Das Computerprogramm 20 umfasst in an sich bekannter Art und Weise als Programmcodemittel Programmcodeanweisungen 30. Dazu gehören zum Beispiel ein oder mehrere Programmcodeanweisungen 30 mit einer Spezifikation 32 der für die Sicherung der virtualisierten Automatisierungslösung 12 relevanten Daten und/oder Dateien. Die oder jede Programmcodeanweisungen 30 mit einer solchen Spezifikation 32 ist ein Beispiel für eine Festlegung der für die Sicherung der virtualisierten Automatisierungslösung 12 notwendigen Daten/Dateien. Jede Programmcodeanweisung 30 mit einer solchen Spezifikation 32 bewirkt eine Sicherung der oder jeder durch die Spezifikation 32 benannten Datei und/oder Daten. Alternativ bewirkt jede derartige Programmcodeanweisung 30, dass die durch zumindest eine später ausgeführte Programmcodeanweisung 30 aufgerufene Datensicherung 22 die jeweiligen Daten/Dateien umfasst. Im Rahmen einer solchen Spezifikation 32 wird der Hypervisor 16 bevorzugt veranlasst, vor der Erstellung der Datensicherung 22 die Konfigurationsdatei oder die Konfigurationsdateien des Hypervisors 16 auf das Bootmedium des Hypervisors 16 zurückzuschreiben. Zu den von zumindest einer Spezifikation 32 umfassten Daten gehört auch das Bootmedium des Hypervisors 16, so dass das Bootmedium bei der Sicherung berücksichtigt wird und damit sichergestellt ist, dass die zurückgeschriebenen Konfigurationsdaten des Hypervisors 16 von der Datensicherung 22 erfasst sind.

Nach Ausführung aller Programmcodeanweisungen 30 mit einer solchen Spezifikation 32 und/oder Ausführung der oder jeder die zumindest eine Spezifikation verarbeitenden Programmcodeanweisung 30 liegt die Datensicherung 22 vor und kann zum Datensicherungsserver 26 übertragen werden. Dies erfolgt mittels zumindest einer Programmcodeanweisung 30, welche das Datenübertragungsziel 34 spezifiziert, zum Beispiel in Form der Adresse des Datensicherungsservers 26.

Optional kann das Computerprogramm 20 Programmcodeanweisungen 30 zur grundsätzlich an sich bekannten Belegung eines Semaphors 36 oder dergleichen beim Beginn der Programmausführung und zur Freigabe des Semaphors 36 zum Ende der Programmausführung umfassen. Auf diese oder ähnliche Weise lässt sich sicherstellen, dass das Computerprogramm 20 nicht gleichzeitig mehrfach ausgeführt wird.

Weiter optional kann das Computerprogramm 20 Programmcodeanweisungen 30 zur Authentifizierung 38 eines Benutzers umfassen, so dass die Datensicherung 22 nur dann erstellt und im Rahmen des Computerprogramms 20 nur dann auf den Datensicherungsserver 26 heruntergeladen wird, wenn der das Computerprogramm 20 aufrufende Bediener sich zum Beispiel durch Eingabe eines Benutzernamens und eines Kennworts als zur Erstellung der Datensicherung 22 autorisiert ausweist.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Kurz zusammengefasst ermöglicht die hier vorgeschlagene Neuerung eine Datensicherung 22 einer auf einem Virtualisierungsserver 10 ablaufenden virtualisierten Automatisierungslösung 12, wobei auf dem Virtualisierungsserver 10 aufgrund eines Aufrufs von einem entfernten Computer 26 ein Computerprogramm 20 mit zumindest einer Programmcodeanweisung 30 mit einer Spezifikation 32 der in die Datensicherung 22 einzuschließenden Daten und Dateien ausgeführt wird und die Datensicherung 22 im Rahmen der Ausführung des Computerprogramms 20 erstellt wird.

## Patentansprüche

1. Verfahren zum Erstellen einer Datensicherung (22) einer auf einem Virtualisierungsserver (10) ablaufenden virtualisierten Automatisierungslösung (12),
wobei auf dem Virtualisierungsserver (10) aufgrund eines Aufrufs von einem entfernten Computer (26) ein Computerprogramm (20) mit zumindest einer Programmcodeanweisung (30) mit einer Spezifikation (32) der in die Datensicherung (22) einzuschließenden Daten und Dateien ausgeführt wird und
die Datensicherung (22) im Rahmen der Ausführung des Computerprogramms (20) erstellt wird.

2. Verfahren nach Anspruch 1, wobei auf dem Virtualisierungsserver (10) ein Hypervisor (16) ausgeführt wird und wobei das Computerprogramm (20) Programmcodeanweisungen (30) umfasst, welche den Hypervisor (16) veranlassen, vor dem Erstellen der Datensicherung (22) dessen Konfigurationsdateien auf ein von der Datensicherung (22) erfasstes Bootmedium des Hypervisors (16) zu schreiben.

3. Verfahren nach Anspruch 1 oder 2, wobei das Computerprogramm (20) Programmcodeanweisungen (30) mit Mitteln (36) zum Sperren gegen eine gleichzeitige mehrfache Ausführung umfasst und wobei bei einer Ausführung des Computerprogramms (20) eine gleichzeitige mehrfache Ausführung verhindert wird.

4. Verfahren nach Anspruch 1, 2 oder 3, wobei das Computerprogramm (20) Programmcodeanweisungen (30) mit Mitteln (38) zur Authentifizierung eines Benutzers umfasst und mittels dieser vor dem Erstellen der Datensicherung (22) die Berechtigung des Benutzers geprüft wird.

5. Verfahren nach einem der vorangehenden Ansprüche, wobei die Datensicherung (22) an den aufrufenden Computer (26) übertragen wird.

6. Computerprogramm (20) mit Programmcodemitteln (30), um alle Schritte von jedem beliebigen der Ansprüche 1 bis 5 durchzuführen, wenn das Computerprogramm (20) auf einem Virtualisierungsserver (10) ausgeführt wird.

7. Virtualisierungsserver (10) mit einer Verarbeitungseinheit und einem Speicher, in den ein Computerprogramm (20) nach Anspruch 6 geladen ist, das beim Betrieb des Virtualisierungsservers (10) aufgrund eines Aufrufs durch einen entfernten Computer (26) ausgeführt wird.
